**Europäisches Patentamt**

**European Patent Office**

**Office européen des brevets**

(19)

(11) Veröffentlichungsnummer: **0 198 961**
**B1**

(12)

# EUROPÄISCHE PATENTSCHRIFT

(45) Veröffentlichungstag der Patentschrift:
09.08.89

(21) Anmeldenummer: 85116370.9

(22) Anmeldetag: 20.12.85

(51) Int. Cl.⁴: **F 27 D 3/02**, F 27 B 9/24,
F 27 D 3/00, B 65 G 39/02

(54) Rollenofen zum Brennen eines flachen oder plattenförmigen keramischen Brenngutes.

(30) Priorität: 18.04.85 DE 3514084

(43) Veröffentlichungstag der Anmeldung:
29.10.86 Patentblatt 86/44

(45) Bekanntmachung des Hinweises auf die Patenterteilung: 09.08.89 Patentblatt 89/32

(84) Benannte Vertragsstaaten:
AT CH DE FR GB IT LI NL SE

(56) Entgegenhaltungen:
DE–A– 1 203 294
DE–A– 2 642 627
DE–A– 3 032 452
FR–A– 1 432 861
FR–A– 2 398 992
US–A– 1 416 727
US–A– 1 468 837
US–A– 3 985 495

(73) Patentinhaber: Buchtal Gesellschaft mit beschränkter Haftung
Buchtalweg
D-8472 Schwarzenfeld(Opf.) (DE)

(72) Erfinder: Bard, Martin
D-8450 Amberg (DE)

(74) Vertreter: Betzler, Eduard, Dipl.-Phys. et al
Postfach 70 02 09 Plinganserstrasse 18a
D-8000 München 70 (DE)

## Beschreibung

Die Erfindung bezieht sich auf ein Verfahren nach dem Oberbegriff des Patentanspruches 1.

Bei das Brenngut einschichtig und ohne Brennhilfsmittel aus feuerfestem Material brennenden Rollenöfen durchläuft das Brenngut die Vorheiz-, Brenn- und Kühlzone auf einem Rollenteppich, dessen aus einem Spezialstahl oder Keramikmaterial bestehende Rollen von außerhalb des Ofens angetrieben werden. Der besondere Vorteil dieser Öfen besteht darin, daß der Einsatz von Wagen und feuerfesten Brennhilfsmitteln entfällt. Diese Transport- und Stützmittel stellen nämlich eine erhebliche Masse dar, die vom Ofen aufgeheizt werden muß und in der Kühlzone wieder zur Abkühlung zu bringen ist. Es wird also ein erheblicher Teil der dem Ofen zum Brand des Brenngutes zugeführten Energie ungenützt verschwendet.

Bei solchen einschichtig und ohne Einsatz von Transport- und Brennhilfsmitteln betriebenen Rollenöfen wird nicht nur eine wesentliche Energieeinsparung erreicht, sondern es läßt sich auch der Brennvorgang schneller und gleichmäßiger durchführen, wobei man außerdem noch zu einem erheblich verkürzten Produktionszyklus gelangt.

Im allgemeinen ist es jedoch nicht zu vermeiden, daß sich die das Brenngut transportierenden Rollen unter dem Einfluß der im Ofen herrschenden hohen Temperaturen etwas verbiegen, unrund werden oder sonstige Deformationen erfahren.

Die Konsequenz dieser Verformungen der Rollen ist eine wechselseitige Verschiebung des flachen oder plattenförmigen Brenngutes beim Durchgang durch den Ofenkanal, so daß es zu unbeabsichtigten Berührungen des flachen oder plattenförmigen Brenngutes an den Rändern kommt.

Dabei treten mitunter Verbackungen infolge der Glasur oder sonstige Beschädigungen der Ränder des flachen oder plattenförmigen Brenngutes auf. Insbesondere aber wandert das plattenförmige oder flache Brenngut auf seinem Weg durch den Ofen zu dessen seitlichen Begrenzungswandungen hinaus, wo es sich übereinander schiebt und gegebenenfalls aufstaut, was zu Beschädigungen des Brenngutes und/oder Produktionsstörungen führen kann. Der bisher gewählte Weg zur Lösung dieses Problems bestand darin, an den Rändern einen Freiraum zu belassen, der etwa 15 bis 20 % der Ofenbreite entspricht. Damit wird aber die Ofenkapazität nur unvollkommen ausgenutzt.

Das Problem, das plattenförmige Brenngut wenigstens an den Kanten zu schützen, indem man ihm eine solche Form gibt, daß gegenseitige Berührungen infolge des unvermeidbaren Auswanderns des Plattengutes bedeutungslos bleiben, ist bereits in der DE-A30 32 451 angesprochen und dadurch gelöst worden, daß das flache oder plattenförmige Brenngut am Umfang wenigstens teilweise einen Rand mit Sollbruchstelle gegenüber dem Plattenumfang aufweist. Damit besteht die Möglichkeit, den Rand des flachen oder plattenförmigen Brenngutes nach dem Brennen längs der Sollbruchstelle ohne Schwierigkeiten zu entfernen und somit längs dieser Bruchkante zu einer sauberen und unbeschädigten Kante zu kommen.

Selbstverständlich erfordert dieses Vorgehen einen zusätzlichen Arbeitsgang nicht nur bei der Formgebung des flachen oder plattenförmigen keramischen Brenngutes, sondern auch an den aus dem Ofen austretenden gebrannten keramischen Platten, was es erstrebenswert erscheinen läßt, nach einer wirtschaftlicheren Verfahrensweise zu suchen.

Eine Lösung des problems, dem Anbacken des Brenngutes an den Rollen des Rollenofens abzuhelfen, wird in der DE-A-33 01 660 angegeben, wo eine Vorrichtung zum Abstützen flacher keramischer Gegenstände in einem Rollenofen beschrieben ist, die trotz Glasurniederschlags eine einwandfreie Abstützung und einen einwandfreien Transport der zu brennenden Gegenstände gewährleisten soll, ohne daß Anbackungen des Brenngutes an den Rollen auftreten. Die Lösung wird darin gesehen, daß die Rollen Erhöhungen und Vertiefungen aufweisen, wobei die zu brennenden Gegenstände jeweils nur auf den Erhöhungen aufliegen. Diese Erhöhungen und Vertiefungen verlaufen nach der Lehre dieser Patentschrift in Längsrichtung der Transportrollen, die als Hohlrohre ausgebildet sind, die senkrecht zur Transportrichtung entsprechende Erhebungen und Vertiefungen aufweisen.

Auch bei einer derartigen Ausbildung des Rollenteppichs des Brennofens ist jedoch ein Auswandern des zu brennenden flachen oder plattenförmigen keramischen Brenngutes in Richtung auf die Seitenwandungen des Ofenkanals nicht verhindert.

Hier will die Erfindung Abhilfe schaffen. Die Erfindung, wie sie in den Ansprüchen gekennzeichnet ist, löst die Aufgabe, ein Verfahren und ein entsprechendes Aggregat zur Durchführung dieses Verfahrens zu schaffen, bei dem Beschädigungen des Brenngutes infolge eines seitlichen Abwanderns des zu brennenden flachen oder plattenförmigen Brenngutes innerhalb eines Rollenofens verhindert wird.

Nach der Erfindung werden über die Länge des Rollenteppichs in vorgegebenen Abständen einzelne Rollen oder Rollengruppen gegenüber den anderen Rollen des Rollenteppichs schneller oder langsamer angetrieben und/oder wenigstens zum Teil Rollen verwendet, die auf wenigstens einem Teil ihrer Länge mit über ihren Umfang jeweils in sich geschlossenen Rillen versehen sind, die in Abstand und Tiefe Rillen einer auf der auf den Rollen aufliegenden Flachseite des flachen oder plattenförmigen Brenngutes vorgesehenen Parallelreliefierung entsprechen.

Durch diese Maßnahme erhält das einzelne keramische Brenngut absatzweise einen Richtimpuls, der es wieder in Vorschubrichtung des Ofenteppichs orientiert. Dadurch wird das Auswandern des keramischen Brennguts in Richtung auf die Seitenwandungen des Ofenkanals verhindert und wird durch einfache Maßnahmen eine Beschädigung des Brennguts während des Transports durch den Rollenofen ausgeschlossen.

Besonders vorteilhaft ist es in diesem Zusammenhang, wenn Abstände zwischen schneller oder langsamer angetriebenen Rollen verwendet werden, die etwas kleiner als die Abmessungen des Brenngutes in Rollenlängsachse sind. Wählt man den Rollenabstand gleich oder größer als die Abmessungen des Brenngutes, könnte dieses von der zuerst angreifenden Rolle einen so starken in eine Richtung wirkenden Impuls erhalten, daß dieser Impuls durch die zweite angreifende Rolle des Rollenofens nurmehr schwer in Gegenrichtung ausgeglichen werden kann, so daß es zu unkontrollierten Bewegungen des Brenngutes kommen kann.

Vorteilhaft ist es ferner, wenigstens zum Teil Rollen zu verwenden, die eine leichte Konizität aufweisen, wobei diese Rollen einzeln oder in Gruppen abwechselnd mit entgegengesetzt gerichteter Konizität den Rollenteppich bilden. Die Konizität braucht dabei nur wenige Winkelgrade zu betragen.

Zwar ist bereits ein Rollenofen bekannt (FR-A-1 432 861), bei dem Gruppen von Rollen des Ofens mit unterschiedlicher Drehzahl angetrieben werden. Allerdings soll hier in bestimmten Ofenzonen eine unterschiedliche Transportgeschwindigkeit des transportierten Brenngutes erreicht werden und zwar in Anpassung an gewünschte thermische Behandlungen des zu transportierenden Gutes, so daß das Brenngut in speziellen Zonen des Ofens länger verweilt, um die für die thermische Behandlung zur Verfügung stehende Dauer zu erhöhen.

Auch aus der DE-B-12 03 294 ist es bekannt, Rollen eines Rollenherdofens mit unterschiedlicher Geschwindigkeit anzutreiben. Allerdings sollen dort lediglich die Austragsrollen des Rollenherdofens schneller als die übrigen Rollen angetrieben werden, um das im Rollenherdofen bereits behandelte Gut schneller aus dem Rollenherd abziehen zu können.

Aus der US-A-3 985 495 ist es schließlich bekannt, Brenngut mit unregelmäßiger Form in Aussparungen auf Rollen eines Rollenofens zu transportieren, wobei die Stützflächen leicht schräg geneigt sind, so daß die Formkörper, die in den Aussparungen transportiert werden, aufgrund ihrer Schwerkraft stets gegen einen durch eine Schulter gebildeten Anschlag laufen und dadurch zentriert werden. Aufgrund des stetigen Andrückens des Brennguts gegen eine Schulter muß mit Beschädigungen des Brennguts während des Transports durch den Rollenofen gerechnet werden.

Schließlich ist es aus der DE-A-2 642 627 bekannt, unterschiedlich profilierte Förderrollen in Härtebädern zu verwenden, worüber eine Beeinflussung des Härteeffektes des zu transportierenden Gutes erreicht wird.

Die Erfindung betrifft ferner ein Aggregat aus einem Rollenofen und darin ohne es stützende Brennhilfsmittel einschichtig und liegend auf einem Rollenteppich transportierten flachen oder plattenförmigen keramischen Brenngutes zur Durchführung des Verfahrens, welches durch die Merkmale im kennzeichnenden Teil des Anspruchs 4 gekennzeichnet ist.

Durch diese Maßnahmen erhält das flache oder plattenförmige keramische Brenngut auf seinem Weg durch den Ofenkanal eine zusätzliche Führung und verläßt praktisch in dem Muster, in dem es in den Rollenofen einfährt, diesen am Ausgangsende, d. h. am Ende der Kühlzone. Ein Auswandern des flachen oder plattenförmigen keramischen Brenngutes zur Seite hin ist bei dieser Art der Rollenausbildung, insbesondere in Kombination mit der Verwendung leicht konischer Rollen praktisch vollständig ausgeschlossen.

Die Temperaturverteilung im Ofen selbst ist gleichmäßiger, weil es nicht zu wechselseitigen Verschiebungen des Brenngutes und Stauungen desselben an den Ofenkanalseitenbegrenzungen und damit zu Leerstellen kommt, wo die Wärmeeinwirkung des Ofens nicht auf Brenngut trifft. Von besonderer Bedeutung ist aber die bessere Handhabungsmöglichkeit des plattenförmigen Brenngutes am Ofenaustrittsende, wo nunmehr das Vereinzeln der einzelnen ausfahrenden Platten ohne Schwierigkeiten vorgenommen werden kann.

Zweckmäßigerweise verlaufen die Rillen senkrecht zur Längs- und Drehachse der Rollen und damit in Transportrichtung des Brennofens. Es ist ferner zweckmäßig, daß die Tiefe der Rillen der Reliefierung auf der entsprechenden Flachseite des plattenförmigen Brenngutes zwischen 5 und 10 %, vorzugsweise 7,5 % der Brenngutdicke beträgt. Damit ist eine ausreichende Führung durch die vorstehenden Rippen gewährleistet, andererseits aber auch die Materialstärke des flachen oder plattenförmigen Brenngutes nicht so geschwächt, daß dieses an Festigkeit verliert.

In weiterer Ausbildung der Erfindung beträgt die Reliefierung vier Rillen pro cm Breite des flachen oder plattenförmigen Brenngutes. Sie kann sich über die gesamte Auflagefläche des Brenngutes erstrecken, aber auch auf zueinander parallele Streifen beschränkt sein.

Vorzugsweise sind die Rollen für einen derartigen Rollenofen dann so ausgebildet, daß die Reliefierung der Rollen des Rollenofens ein kongruentes Abbild der Reliefierung des flachen oder plattenförmigen keramischen Brenngutes darstellt. Mit dem Vorschlag nach der Erfindung wird die Ofenkapazität erhöht, das Sortierergebnis verbessert und die eingesetzte Energie so genutzt, daß es an den gewünschten Stellen voll zur Wirkung kommt.

Die Zeichnung zeigt in

Fig. 1 zwei gegeneinander gesetzte leicht konische Rollen als Teil eines Rollenteppichs für einen Rollenofen zum Brennen keramischer Platten, von denen zwei schematisch angedeutet sind und wobei die Konizität der Rollen stark übertrieben gezeichnet ist ;

Fig. 2 einen Ausschnitt aus einer mit Rillen versehenen Rolle ; und in

Fig. 3 eine Unteransicht eines plattenförmigen keramischen Brenngutes.

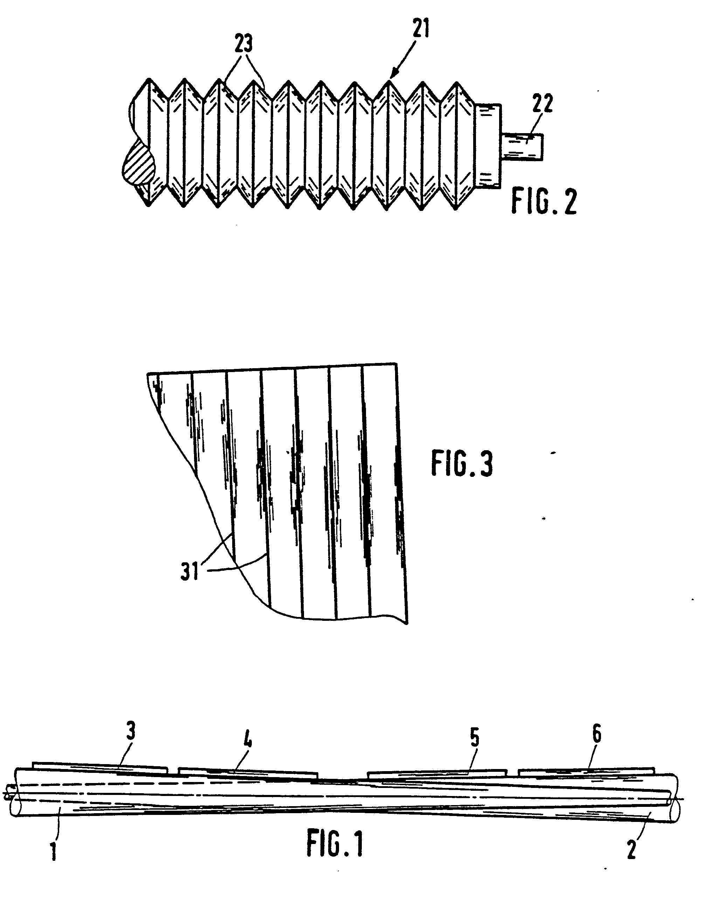

In Fig. 1 sind zwei leicht konische Rollen 1 und 2 als Teil des Rollenteppichs eines Rollenofens zum Brennen flachen oder plattenförmigen keramischen Brenngutes angedeutet, die von außerhalb der seitlichen, nicht gezeichneten Begrenzungswände des Ofenkanals angetrieben werden.

Die Konizität der Rollen ist übertrieben dargestellt. Sie liegt in der Größenordnung von nur wenigen Winkelgraden. Das genügt, um das Brenngut, wiedergegeben als keramische Platten 3, 4, 5 und 6 nach innen und damit von den nicht gezeichneten seitlichen Begrenzungswänden des Ofenkanals fernzuhalten.

Verstärkt wird der Führungseffekt, wenn in Weiterbildung der Erfindung nach Fig. 2 Rollen 21, bei denen es sich um zylindrische, aber auch um leicht konische Rollen handeln kann, eine senkrecht zu Achse 22 stehenden Reliefierung 23 aufweisen der nach Fig. 3 eine entsprechende Reliefierung 31 auf der auf der Rolle 21 aufliegenden Seite des plattenförmigen keramischen Brenngutes entspricht. Man kann ohne weiteres aus der Zeichnung erkennen, daß sich eine entsprechende ausgezeichnete Führung des plattenförmigen keramischen Brenngutes auf der Rolle 21 ergeben muß.

Mitunter genügt es, insbesondere bei Verwendung eines plattenförmigen Brenngutes in der Ausbildung nach Fig. 3 auf den Einsatz konischer Rollen zu verzichten und das Rollenbett nur auf im allgemeinen zylindrischen Rollen 21 in der Ausbildung nach Fig. 2 zu bilden. Ferner ist es selbstverständlich möglich, auch die konischen Rollen 1, 2 mit Rillen wie bei der Rolle 21 nach Fig. 2 zu versehen.

**Patentansprüche**

1. Verfahren zur Vermeidung des seitlichen Abwanderns eines zu brennenden flachen oder plattenförmigen keramischen Brenngutes beim Transport durch einen Rollenofen, bei dem das keramische Brenngut ohne es stützende Brennhilfsmittel von einem angetriebenen Rollenteppich des Rollenofens einschichtig und liegend durch den Ofenkanal geführt wird, dadurch gekennzeichnet, daß über die Länge des Rollenteppichs in vorgegebenen Abständen einzelne Rollen oder Rollengruppen gegenüber den anderen Rollen des Rollenteppichs schneller oder langsamer angetrieben werden und/oder wenigstens zum Teil Rollen verwendet werden, die auf wenigstens einem Teil ihrer Länge mit über ihren Umfang jeweils in sich geschlossenen Rillen versehen sind, die in Abstand und Tiefe Rillen einer auf der auf den Rollen aufliegenden Flachseite des flachen oder plattenförmigen Brenngutes vorgesehenen Parallelreliefierung entsprechen.

2. Verfahren nach Anspruch 1, dadurch gekennzeichnet, daß Abstände zwischen den schneller oder langsamer angetriebenen Rollen verwendet werden, die etwas kleiner als die Abmessungen des Brenngutes in Rollenlängsachse sind.

3. Verfahren nach Anspruch 1 oder 2, dadurch gekennzeichnet, daß wenigstens zum Teil Rollen verwendet werden, die eine leicht Konizität aufweisen, wobei diese Rollen einzeln oder in Gruppen abwechselnd mit entgegengesetzt gerichteter Konizität den Rollenteppich bilden.

4. Aggregat aus einem Rollenofen und darin ohne es stützende Brennhilfsmittel einschichtig und liegend auf einem Rollenteppich transportiertem flachem oder plattenförmigem keramischem Brenngut zur Durchführung des Verfahrens nach einem der Ansprüche 1 bis 3, dadurch gekennzeichnet, daß wenigstens ein Teil der Rollen (21) auf wenigstens einem Teil ihrer Länge mit über ihren Umfang jeweils in sich geschlossenen Rillen versehen sind, die in Abstand und Tiefe Rillen einer auf der auf den Rollen (21) aufliegenden Flachseite des flachen oder plattenförmigen Brenngutes vorgesehenen Parallelreliefierung (31) entsprechen.

5. Aggregat nach Anspruch 4, dadurch gekennzeichnet, daß die Tiefe der Rillen der Reliefierung (31) auf der entsprechenden Flachseite des flachen oder plattenförmigen Brenngutes zwischen 5 % und 10 %, vorzugsweise 7,5 % der Brenngutdicke beträgt.

6. Aggregat nach Anspruch 5, dadurch gekennzeichnet, daß die Reliefierung (23) der Rollen (21) vier Rillen pro Zentimeter Breite des flachen oder plattenförmigen Brenngutes beträgt.

7. Aggregat nach einem der Ansprüche 4 bis 6, dadurch gekennzeichnet, daß die Reliefierung (23) der Rollen (21) des Rollenofens ein kongruentes Abbild der Reliefierung (31) des flachen oder plattenförmigen keramischen Brenngutes darstellt.

**Claims**

1. Method for avoiding lateral drifting of flat or tileshaped ceramic firing material to be burnt during transport through a roller kiln, in which the ceramic firing material is guided in one layer and in lying position through the kiln channel by a driven roller carpet without any auxiliary firing means supporting said material, characterised in that over the length of the roller carpet at predetermined distances single rollers or roller groups are driven at a higher or lower speed as compared with the other rollers of the roller carpet and/or that at least partially rollers are used which on at least part of their length are provided with grooves closed upon themselves along their periphery and corresponding in their spacing and depth to grooves of a parallel relief provided on the flat side of the flat or tile-shaped firing material lying on the rollers.

2. Method according to claim 1, characterised in that the distances between the rollers driven at a higher or lower speed are slightly smaller than the dimensions of the firing material along the longitudinal axis of the rollers.

3. Method according to claim 1 or 2, characterised in that at least partially rollers are used which are slightly conical and which, taken separately or groupwise with alternatingly opposed conicity, constitute the roller carpet.

4. Aggregate comprising a roller kiln and flat or tileshaped ceramic firing material transported therein in one layer and in lying position on a roller carpet without any auxiliary firing means supporting said material, for carrying through the method of any of the claims 1 to 3, characterised in that at least part of the rollers (21) are provided on at least part of their length with grooves closed upon themselves along their periphery and corresponding in their spacing and depth to grooves of a parallel relief (31) provided on the flat side of the flat or tile-shaped firing material lying on the rollers (21).

5. Aggregate according to claim 4, characterised in that the depth of the grooves of the relief (31) on the corresponding flat side of the flat or tile-shaped firing material is between 5 % and 10 %, preferably 7.5 % of the thickness of the firing material.

6. Aggregate according to claim 5, characterised in that the relief (23) of the rollers (21) has four grooves per centimeter of width of the flat or tile-shaped firing material.

7. Aggregate according to any of the claims 4 to 6, characterised in that the relief (23) of the rollers (21) of the roller kiln constitutes a congruent image of the relief (31) of the flat or tile-shaped ceramic firing material.

**Revendications**

1. Procédé pour éviter la dérive latérale, pendant le transport à travers un four à rouleaux, d'un produit céramique de cuisson plat ou en forme de plaques, dans lequel le produit céramique de cuisson, en une seule couche et à l'horizontale, est guidé à travers le canal du four par un tapis de rouleaux entraîné, en l'absence d'un matériel d'enfournement soutenant ledit produit, caractérisé en ce que sur la longueur du tapis de rouleaux, à des écarts prédéterminés, quelques-uns des rouleaux ou groupes de rouleaux sont entraînés à une vitesse supérieure ou inférieure à celle des autres rouleaux du tapis de rouleaux, et/ou qu'on utilise, au moins en partie, des rouleaux qui comportent, sur une partie au moins de leur longueur, des cannelures qui se renferment sur leur périphérie et qui, en ce qui concerne leur écartement et leur profondeur, correspondent à des cannelures d'un relief parallèle prévu sur le côté plat du produit de cuisson plat ou en forme de plaques qui s'applique contre les rouleaux.

2. Procédé selon la revendication 1, caractérisé en ce que les écarts entre les rouleaux entraînés à une vitesse supérieure ou inférieure sont un peu moins grands que les dimensions du produit de cuisson dans le sens longitudinal des rouleaux.

3. Procédé selon la revendication 1 ou 2, caractérisé en ce qu'on utilise, au moins en partie, des rouleaux qui présentent une certaine conicité et qui, chacun en particulier ou en groupes avec conicité alternante opposée, constituent le tapis de rouleaux.

4. Agrégat constitué par un four à rouleaux et par un produit céramique de cuisson plat ou en forme de plaques transporté dedans sur un tapis de rouleaux en une seule couche et à l'horizontale, en l'absence d'un matériel d'enfournement soutenant ledit produit, pour mettre en œuvre le procédé selon l'une quelconque des revendications 1 à 3, caractérisé en ce qu'au moins une partie des rouleaux (21) comportent sur une partie au moins de leur longueur des cannelures renfermées sur leur périphérie et qui, en ce qui concerne leur écartement et leur profondeur, correspondent à des cannelures d'un relief parallèle (31) prévu sur le côté plat du produit de cuisson plat ou en forme de plaques qui s'applique contre les rouleaux (21).

5. Agrégat selon la revendication 4, caractérisé en ce que la profondeur des cannelures du relief (31) sur le côté plat correspondant du produit de cuisson plat ou en forme de plaques, représente de 5 % a 10 %, de préférence 7,5 % de l'épaisseur du produit de cuisson.

6. Agrégat selon la revendication 5, caractérisé en ce que le relief (23) des rouleaux (21) comporte quatre cannelures par centimètre de largeur du produit de cuisson plat ou en forme de plaques.

7. Agrégat selon l'une quelconque des revendications 4 à 6, caractérisé en ce que le relief (23) des rouleaux (21) du four à rouleaux représente une image congruente du relief (31) du produit céramique de cuisson plat ou en forme de plaques.

23    21

22

FIG.2

FIG.3

31

3        4        5        6

1        FIG.1        2